# EUROPÄISCHE PATENTSCHRIFT

(11) **EP 2 714 558 B1**
(45) Veröffentlichungstag und Bekanntmachung des Hinweises auf die Patenterteilung: **13.07.2016**
(21) Anmeldenummer: 12728177.2
(22) Anmeldetag: 23.05.2012
(51) Int. Cl.: B65G 47/80, B65G 47/84, B65G 29/00

(54) **VERFAHREN ZUM ÜBERFÜHREN VON GEGENSTÄNDEN UND UMLENKEINHEIT**
METHOD FOR TRANSFERRING ARTICLES, AND DEFLECTING UNIT
PROCÉDÉ DE TRANSFERT D'OBJETS ET UNITÉ DE DÉVIATION

(30) Priorität: 30.05.2011 DE 102011103563
(43) Veröffentlichungstag der Anmeldung: 09.04.2014
(73) Patentinhaber: Winkler + Dünnebier GmbH, 56564 Neuwied (DE)
(72) Erfinder: SEGER, Reiner, 56566 Neuwied (DE); VIEWEG, Jürgen, 56220 Sankt Sebastian (DE); RINKE, Andreas, 23843 Bad Oldesloe (DE); POPP, Konrad, 86179 Augsburg (DE)
(74) Vertreter: Walkenhorst, Andreas
(86) Internationale Anmeldenummer: PCT/EP2012/002196
(87) Internationale Veröffentlichungsnummer: WO 2012/163496

(56) Entgegenhaltungen:
- EP-A1- 0 805 116
- DE-A1- 4 117 296
- DE-U1- 20 020 364
- US-A1- 2004 144 619

## Beschreibung

Die Erfindung betrifft ein Verfahren zum Überführen von in Verpackungsbeutel eingeschlagenen Produktstapel, von einem Zufördersystem, in dem die in Verpackungsbeutel eingeschlagenen Produktstapel in einer Zuförderrichtung transportiert werden, auf ein Abfördersystem, in dem die Verpackungsbeutel eingeschlagenen Produktstapel in einer in einem vorgegebenen Verdrehwinkel zur Zuförderrichtung orientierten Abförderrichtung weitertransportiert werden, wobei die in Verpackungsbeutel eingeschlagen Produktstapel in einem Überführungsbereich zwischen dem Zu- und dem Abfördersystem mit ihrem Schwerpunkt auf dem Segment einer Kreisbahn geführt werden. Sie betrifft weiter eine Umlenkeinheit zum Überführen von in Verpackungsbeutel eingeschlagenen Produktstapel, von einem Zufördersystem auf ein Abfördersystem, dessen Förderrichtung in einem vorgegebenen Verdrehwinkel zur Förderrichtung im Zufördersystem orientiert ist.

Hygieneprodukte wie beispielsweise Papiertaschentücher, Slipeinlagen, Damenbinden, Windeln oder dergleichen werden üblicherweise einzeln oder in vorgegebenen Chargen, beispielsweise in der Art von Fünfer- oder Zehnerpacks, in Folie verpackt und in dieser verpackten Form verbrauchs- oder gebrauchsfertig angeboten. Die das Hygieneprodukt bzw. den Stapel der Hygieneprodukte umgebende Folie bildet dabei einen so genannten Verpackungsbeutel, der u.a. beispielsweise mit einer Perforation zum erleichterten Öffnen und/oder mit Klebelaschen oder dergleichen zum Wiederverschließen ausgerüstet sein kann. Gleichermaßen können auch andere Produkte oder Produktchargen, wie beispielsweise Zigarettenpackungen oder dergleichen, mit einem derartigen Verpackungsbeutel in der Art einer Umverpackung versehen werden.

Zum Einbringen des Produkts, insbesondere des Hygieneprodukts oder des Stapels von Hygieneprodukten, in den Verpackungsbeutel kann es beispielsweise vorgesehen sein, dass geeignet zugeschnittene, zur Bildung des Verpackungsbeutels vorgesehene Folienstücke bereitgestellt werden, in die das Produkt eingelegt wird, wobei die Folie anschließend um dieses herumgeschlagen und an den Rändern verschweißt wird. Dieses Verpacken der Produkte erfolgt üblicherweise in einer entsprechend ausgelegten Verpackungsanlage, die der eigentlichen Herstellungsanlage für die Hygieneprodukte verfahrensseitig nachgeschaltet ist. Bei der Übergabe von der Herstellungs- an die Verpackungsanlage kann es gerade im Hinblick auf üblicherweise angestrebte hohe Produktions- und Durchsatzraten gewünscht oder auch erforderlich sein, die Orientierung der Produkte relativ zu ihrer Transportrichtung zu verändern. Ein Verfahren zum Überführen von Gegenständen der oben genannten Art, das besonders hohe Durchsatzraten bei vergleichsweise schonender Behandlung der zu übergebenden Produkte ermöglicht, ist aus der gattungsgemäßen DE 41 17 296 A1 bekannt. Dabei werden die zu übergebenden Gegenstände von einem Zufördersystem aufgenommen und in einem Übrführunsgbereich unter Beibehaltung ihrer Orientierung relativ zur Zuförderrichtung auf dem Segment einer Kreisbahn bis hin zu einem Abfördersytem geführt, auf dem sie anschließend in einer Abförderrichtung weitertransportiert werden. Das Segment der Kreisbahn kann dabei insbesondere ein Viertelkreis sein, wenn Zu- und Abförderrichtung einen Winkel von etwa 90° zueinander bilden. In Folge der Beibehaltung der Orientierung der Produkte relativ zur Zuförderrichtung auch während des Überführens sind diese nach der Abgabe an das Abfördersystem beim Weitertransport um einen Verdrehwinkel von ebenfalls etwa 90° relativ zu ihrer Transportrichtung verdreht.

Gerade beim Verpacken von Hygieneprodukten, die in besonders großer Stückzahl hergestellt und in Form von Produktstapeln, beispielsweise 5er- oder 10er-Packs, verpackt werden, wie beispielsweise Papiertaschentücher, Slipeinlagen, Damenbinden oder dergleichen, ist eine hohe Bearbeitungsgeschwindigkeit und Durchsatzrate besonders wünschenswert. Aus diesem Grund werden die Verpackungssysteme üblicherweise in der Art von Durchlaufsystemen ausgelegt. Insbesondere die so genannten Folienschlauchsysteme sind für hohe Bearbeitungsgeschwindigkeiten und Durchsatzraten grundsätzlich gut geeignet, da beispielsweise beim Einschlagen der Produkte oder Produktstapel in die Schlauchfolie zur Bildung des Folienschlauchs ein Verschweißen der seitlichen Längsnaht von der Seite her, also im Durchlauf und ohne Systemstillstand, möglich ist. Bei den bekannten Folienschlauchsystemen ist jedoch üblicherweise beim Falten und Verschweißen der Seitenbereiche des Verpackungsbeutels ein kurzfristiger Systemstillstand in Kauf zu nehmen, bei dem der Weitertransport der Produkte vorübergehend unterbrochen wird.

Derartige, auch kurzfristige Unterbrechungen des Weitertransports, die insbesondere für die Schweißschritte notwendig werden, reduzieren dabei in unerwünschter Weise die Durchsatz- und Produktionsrate des Systems. Um dabei besonders hohe Durchsatzraten unter weitestgehender Vermeidung von Systemstillständen zu ermöglichen, kann das System - wie in der nicht vorveröffentlichten DE 10 2010 046 561.5 beschrieben - für einen Schweißzugriff von der Seite her ausgelegt sein, der die Ausführung des jeweiligen Schweißschritts im Durchlaufbetrieb ermöglicht. Hierzu ist die in der DE 10 2010 046 561.5 beschriebene Verpackungsanlage dafür ausgelegt, die zu verpackenden Produkte zunächst in einen Beutelfolienschlauch einzuschlagen und diesen anschließend durch eine erste Schweißstation zu führen, in der der mit den Produkten versehene Beutelfolienschlauch in einem ersten Schweißschritt seitlich verschweißt wird. Anschließend erfolgt eine Trennung des Beutelfolienschlauchs in einzelne, jeweils einen oder zwei Produktstapel enthaltende Verpackungsbeutel. Diese werden relativ zu ihrer Transportrichtung um einen vorgegebenen Verdrehwinkel von insbesondere etwa 90° gedreht und sodann durch eine zweite Schweißstation geführt, in der in einem zweiten Schweißschritt die Stirnseiten des Verpackungsbeutels ebenfalls unter seitlichem Zugriff im Durchlaufbetrieb verschweißt werden.

Der Erfindung liegt die die Aufgabe zu Grunde, ein Verfahren der oben genannten Art derart weiterzubilden, dass auch in einem System der genannten Art, bei dem die Drehung der Gegenstände relativ zu ihrer Transportrichtung bereits vor dem Verschweißen der Stirnseiten der Verpackungsbeutel erfolgen soll, besonders hohe Durchsatz- und Produktionsraten erreichbar sind. Zudem soll eine für die Durchführung des Verfahrens besonders geeignete Umlenkeinheit angegeben werden.

Diese Aufgabe wird erfindungsgemäß dadurch gelöst, dass die in Verpackungsbeutel eingeschlagenen Produktstapel in ihrer Orientierung relativ zur Zuförderrichtung im Überführungsbereich vorübergehend derart zur Abforderrichtung hin geneigt werden, dass die Komponente parallel zur Zuförderrichtung der im Überführungsbereich auftretenden, auf die in Verpackungsbeutel eingeschlagenen Produktstapel wirkenden Zentrifugalkraft einen vorgegebenen Maximalwert zu keiner Zeit überschreitet.

Die Erfindung geht dabei von der Überlegung aus, dass die zu überführenden Gegenstände für die angestrebten hohen Durchsatzraten im Überführungsbereich unter Zugriff von außen, vorzugsweise in einem System mit Saugvakuum, auf der Kreisbahn geführt werden sollten. Im System nach der DE 41 17 296 A1 ist dies grundsätzlich unproblematisch, da hier die Gegenstände einzeln übergeben und überführt werden. Bei der Ertüchtigung für ein System, bei dem Verpackungsbeutel mit darin enthaltenen Produktstapeln und noch offenen, nicht verschweißten Stirnseiten übergeben werden sollen, ist demgegenüber jedoch kein unmittelbarer, sondern nur ein mittelbarer mechanischer Zugriff auf die Produkte, nämlich über den sie bereits umgebenden Verpackungsbeutel, möglich.

Bei der Überführung der Gegenstände auf dem Kreisbahnsegment bedeutet dies, dass die Produkte oder Gegenstände bezüglich der Geschwindigkeitskomponente in Zuförderrichtung über die Strecke des Kreisradius von einer vergleichsweise hohen Transportgeschwindigkeit in relativ kurzer Zeit auf eine vergleichsweise geringe Restgeschwindigkeit (bei gleichbleibender Transportgeschwindigkeit insgesamt ist diese Restgeschwindigkeit gleich dem Produkt aus Transportgeschwindigkeit und dem Cosinus des Verdrehwinkels zwischen Zu- und Abförderrichtung, also bei einer besonders bevorzugt vorgesehenen Änderung der Transportrichtung um einen Verdrehwinkel von 90° sogar gleich null) abgebremst werden. In Richtung quer zur Zuförderrichtung, also bei einer Änderung der Transportrichtung um einen Verdrehwinkel von 90° in Abförderrichtung, werden sie hingegen von null auf Transportgeschwindigkeit beschleunigt. In Zuförderichtung bedeutet dies beim System der genannten Art, dass die von außen zugreifende Übergabeeinheit, also beispielsweise ein Saugsystem, außen am Verpackungsbeutel angreift. Die darin befindlichen Produkte müssen während des Abbremsens in Zuförderrichtung sodann aufgrund der noch offenen Stirnseiten des Verpackungsbeutels im Wesentlichen über die Haftreibung an der Innenoberfläche des Verpackungsbeutels abgebremst werden. Gerade im Hinblick auf gängige Materialien für den Verpackungsbeutel, insbesondere Verpackungsfolie, könnte diese jedoch gerade für Produkte wie Stapel von Papiertaschentüchern oder dergleichen, zu gering sein, so dass der Produktstapel in unerwünschter Weise beim Abbremsen in Zuförderrichtung aus der noch offenen Stirnseite des Verpackungsbeutels herausgleiten könnte.

Um dem entgegenzuwirken, sollte zumindest phasenweise beim Abbremsen des Produktstapels in Zuförderrichtung ein seitliches Anhaften des Produktstapels an der Innenoberfläche des Verpackungsbeutels geeignet unterstützt werden. Dies ist erreichbar, indem die Zentrifugalkraft bei der Kreisführung des den Produktstapel beinhaltenden Verpackungsbeutels gezielt genutzt wird. Dazu wird die Orientierung des Verpackungsbeutels während seiner Überführung auf der Kreisbahn zumindest vorübergehend verändert. Die Orientierung wird dabei während der Überführungsphase vorzugsweise kontinuierlich angesteuert, wobei als Auslegungsgrundsatz für eine entsprechende Ansteuerung vorteilhafterweise vorgesehen ist, dass in der Überführungsphase die Kraftkomponente der infolge der Drehbewegung auf den Produktstapel wirkenden Zentrifugalkraft in Längsrichtung des Verpackungsbeutels einen vorgegebenen Grenzwert zu keinem Zeitpunkt überschreitet. Dieser Grenzwert wird dabei vorteilhafterweise derart vorgegeben, dass er mit einem hinreichenden Sicherheitsabstand unterhalb der Losbrechkraft des Produktstapels vom ihn umgebenden Verpackungsbeutel liegt.

Erfindungsgememäß wird der Verpackungsbeutel aus den genannten Gründen während der Überführungsphase zumindest vorübergehend zur Abförderrichtung hin geneigt. Durch eine derart geneigte Orientierung des Verpackungsbeutels ist erreicht, dass die beim Abbremsen wirkende Zentrifugalkraft einerseits in ihrer Komponente parallel zur Längsrichtung des Verpackungsbeutels, also in Richtung auf dessen Stirnseite hin, reduziert und andererseits in ihrer Komponente quer zur Längsrichtung des Verpackungsbeutels, also in Richtung auf dessen Seitenwand hin, erhöht und die Haftreibung zwischen Produktstapel und Innenwand des Verpackungsbeutels entsprechend verstärkt wird.

Um den erwünschten seitlichen Zugriff zur späteren Verschweißung der Stirnseiten des Verpackungsbeutels noch weiter zu begünstigen, wird in vorteilhafter Weiterbildung die vorübergehende Neigung der in Verpackungsbeutel eingeschlagenen Produktstapel in ihrer Orientierung relativ zur Zuförderrichtung noch während der Überführung auf dem Kreisbahnsegment wieder korrigiert und kompensiert, so dass die in Verpackungsbeutel eingeschlagenen Produktstapel mit bezüglich ihrer ursprünglichen Orientierung im Zufördersystem im wesentlichen unveränderter Orientierung an das Abfördersystem übergeben werden. Diese Korrektur der Orientierung erfolgt vorzugsweise in einer vergleichsweise späten Phase der Überführung. Für den Bewegungsvorgang des Verpackungsbeutels bedeutet dies, dass dieser sich im Wesentlichen aus der Überlagerung zweier Bewegungen zusammensetzt, nämlich einerseits der Bewegung seines Schwerpunkts auf der Kreisbahn und andererseits einer Hin- und Her-Kippbewegung um seine im Wesentlichen parallel zur Rotationsachse der Kreisbewegung ausgerichteten Hochachse.

Vorteilhafterweise werden die in Verpackungsbeutel eingeschlagenen Produktstapel zudem während der Führung auf der Kreisbahn im Überführungsbereich um 90° um ihre Längsachse gekippt, so dass beispielsweise ein "stehend" zugeführter Gegenstand in liegender Orientierung aus der Umlenkeinheit wieder abgeführt wird.

Bezüglich der Umlenkeinheit wird die genannte Aufgabe gelöst durch eine Steuereinheit, die derart ausgelegt ist, dass die in Verpackungsbeutel eingeschlagenen Produktstapel in ihrer Orientierung relativ zur Zuförderrichtung im Überführungsbereich vorübergehend derart geneigt werden, dass die Komponente parallel zur Zuförderrichtung der im Überführungsbereich auftretenden, auf die Verpackungsbeutel eingeschlagenen Produktstapel wirkenden Zentrifugalkraft einen vorgegebenen Maximalwert zu keiner Zeit überschreitet.

Die mit der Erfindung erzielten Vorteile bestehen insbesondere darin, dass durch die geeignete Einstellung der Orientierung während der Überführungsphase der Gegenstände auch bei besonders gering gehaltenem apparativen Aufwand eine zuverlässige Umlenkung des Produktstroms möglich ist, ohne dass infolge der auftretenden Längskräfte ein Herausgleiten der in den Verpackungsbeuteln geführten Produktstapel auftritt.

Ein Ausführungsbeispiel der Erfindung wird anhand einer Zeichnung näher erläutert. Darin zeigen:
- FIG. 1: eine Verpackungsanlage zum Verpacken von Hygieneprodukten,
- FIG. 2: eine Umlenkeinheit der Verpackungsanlage nach FIG. 1,
- FIG. 3: einen Mitnehmer der Umlenkeinheit nach FIG. 2, und
- FIG. 4,5: jeweils schematisch einen Bewegungsablauf.

Gleiche Teile sind in allen Figuren mit denselben Bezugszeichen versehen.

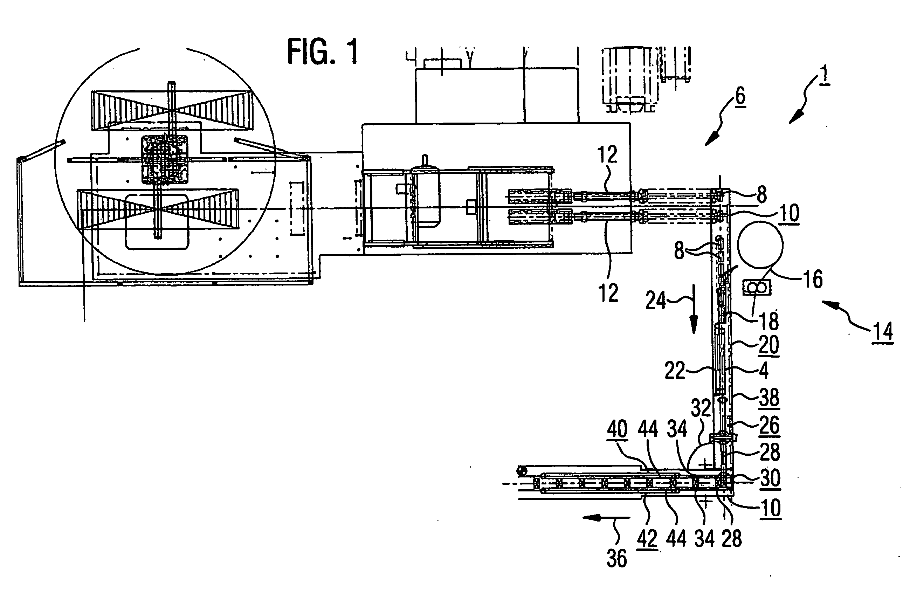

Die Verpackungsanlage 1 gemäß FIG. 1 ist zum Verpacken von Hygieneprodukten in Verpackungsbeutel vorgesehen. Im Ausführungsbeispiel sollen dabei als Hygieneprodukte Papiertaschentücher chargenweise, also als Stapel einzelner Taschentücher, mit einer Chargengröße von jeweils zehn Stück in jeweils einen Verpackungsbeutel eingebracht werden. Alternativ könnten selbstverständlich aber auch andere Chargengrößen, beispielsweise die Verpackung von drei oder fünf Papiertaschentüchern in einen Verpackungsbeutel, oder auch andere Hygieneprodukte wie beispielsweise Slipeinlagen, Damenbinden oder dergleichen, vorgesehen sein.

Die Verpackungsanlage 1 ist dabei als so genannter Folienschlauch-Verpacker ausgelegt, bei dem die zu verpackenden Papiertaschentücher chargen- oder stapelweise zunächst in einen Folienschlauch 4 eingeschlagen werden. Dazu umfasst die Verpackungsanlage 1 eine Zuführeinheit 6, über die die Papiertaschentücher in Form von Produktstapeln 8, jeweils umfassend zehn übereinander liegende Papiertaschentücher, einem Transportsystem 10 zugeführt werden. Die Zuführeinheit 6 ist dabei im Ausführungsbeispiel zweibahnig ausgeführt, d. h. in der Art einer parallelen Anordnung zweier Zuführschienen 12 werden die Produktstapel 8 parallel zueinander dem Transportsystem 10 zugeführt. Diese zweibahnige Anordnung ermöglicht insbesondere die Zusammenführung mehrerer Transportstränge für eine gemeinsame Weiterverarbeitung der Produktstapel 8. Damit sind - im Vergleich zur Bereitstellungsrate der Produktstapel 8 bei deren Herstellung - verdoppelte Durchsatzraten beim Verpacken und bei der Weiterverarbeitung der Produktstapel 8 erreichbar.

Dem Transportsystem 10 ist u.a. eine Einschlagstation 14 zugeordnet, in der in einem geeigneten Folienspeicher, beispielsweise in Form von Rollen oder dergleichen, die zur Bildung der Verpackungsbeutel vorgesehene Schlauchfolie 16 vorgehalten ist. In der Einschlagstation 14 ist ein geeignet geformter Formschuh 18 vorgesehen, über den die Schlauchfolie 16 um die im Transportsystem 10 transportierten Produktstapel 8 gelegt wird, wobei die Papiertaschentücher in die Folie eingeschlagen werden. Der Formschuh 18 ist dabei derart ausgestaltet, dass die zugeführte Schlauchfolie die durchlaufenden Produktstapel 8 vollständig umgibt, wobei an der Längskante des dabei entstehenden Folienschlauchs 4 eine Überlappung der entsprechenden Kantenbereiche der Folie eingestellt wird.

Die Einschlagstation 14 ist dabei mit geeigneten Mitteln zur örtlichen Synchronisierung der Produktstapel 8 mit der Schlauchfolie 16 versehen. Dabei ist insbesondere vorgesehen, die Produktstapel 8 relativ zur Schlauchfolie 16 korrekt zu positionieren, so dass die Lage der Produktstapel 8 relativ zu einer auf der Schlauchfolie 16 aufgebrachten Bedruckung und/oder relativ zu einer darin eingebrachten Perforation vorgegebene Randbedingungen erfüllt. Damit kann beispielsweise sichergestellt sein, dass eine durch eine Perforation in der Schlauchfolie 16 gebildete Zugriffsöffnung im Verpackungsbeutel auch geeignet relativ zum in den Verpackungsbeutel eingeschlagenen Produktstapel 8 positioniert ist.

Über das Transportsystem 10 sind die zu verpackenden Hygieneprodukte von der Einschlagstation 14 aus gemeinsam mit der sie umgebenden Schlauchfolie 16 einer nachgelagerten ersten Schweißstation 20 zuführbar. Die erste Schweißstation 20 weist dabei in seitlicher Anordnung eine geeignet ausgelegte, insbesondere als Schweißspiegel ausgestaltete Heizeinrichtung 22 auf, über die der Folienschlauch 4 auf eine zum Schweißen ausreichend hohe Temperatur beheizbar ist. Infolge der Beheizung werden die überlappenden Randbereiche der Folie miteinander verschweißt, so dass in der ersten Schweißstation 20 der eigentliche Folienschlauch 4 entsteht. Der Folienschlauch 4 bildet somit eine durchgehende Umhüllung mehrerer aufeinander folgender Produktstapel 8 von Papiertaschentüchern.

Durch den Pfeil 24 ist die Transportrichtung der Produktstapel 8 der Papiertaschentücher auf dem Transportsystem 10 angedeutet. In dieser Transportrichtung gesehen nach der ersten Schweißstation 20 ist eine Vereinzelungs- oder Trenneinheit 26 vorgesehen, über die der mit den Hygieneprodukten versehene Folienschlauch 4 in jeweils einen oder zwei Produktstapel 8 beinhaltende Verpackungsbeutel 28 vereinzelt wird. Diese Vereinzelung ermöglicht nachfolgend eine individualisierte Weiterverarbeitung jeweils einzelner in die Folie eingeschlagener Produktstapel 8. Im Ausführungsbeispiel gem. Fig. 1 ist dabei die Ausführungsform gezeigt, bei der einzelnen Produktstapel 8 in den Verpackungsbeutel 28 geführt werden. Alternativ können auch mehrere Produktstapel 8 in einem Verpackungsbeutel 28 geführt sein, wobei die endgültige Voreinzelung in einem späteren schritt, insbesondere nach der Umlenkung erfolgen kann.

Nach der Vereinzelung der Produktstapel 8 mündet das Transportsystem 10 in eine Umlenkeinheit 30, in der die mit den Hygieneprodukten versehenen Verpackungsbeutel 28 relativ zur Transportrichtung um einen vorgegebenen Verdrehwinkel 32 gedreht werden. Der Verdrehwinkel 32 ist dabei derart gewählt, dass nach der Drehung ein seitlicher Zugriff auf die noch nicht verschweißten Stirnseiten 34 des den jeweiligen Produktstapel 8 beinhaltenden Verpackungsbeutels 28 möglich ist. Dementsprechend entspricht der Verdrehwinkel 32 basierend auf der Grundfläche des Produktstapels 8 dem von zwei Seiten des Produktstapels 8 aufgespannten Winkel. Im Ausführungsbereich weist der Produktstapel 8 eine im Wesentlichen rechteckige Grundfläche auf, so dass ein Verdrehwinkel 32 von 90° gewählt ist.

Im Ausführungsbeispiel ist die Umlenkeinheit 30 dabei derart ausgestaltet, dass im Bereich der Umlenkeinheit 30 - wie durch den Pfeil 36 angedeutet - eine Änderung der Transportrichtung der Hygieneprodukte auf dem Transportsystem 10 um 90° erfolgt. Diese Änderung der Transportrichtung ist dabei vorgesehen, ohne dass eine Änderung der Orientierung der Produktstapel 8 mit dem sie umgebenden Verpackungsbeutel 28 erfolgt, so dass sich relativ zur Transportrichtung gesehen die Orientierung der Produktstapel 8 in der Umlenkeinheit 30 um etwa 90° ändert. Der der Umtenkeinheit 30 vorgelagerte Teil des Transportsystems 10 bildet somit ein Zufördersystem 38 für die Umlenkeinheit 30, in dem die Verpackungsbeutel 28 mit den enthaltenen Produktstapeln 8 in der durch den Pfeil 24 charakterisierten Zuförderrichtung als Transportrichtung transportiert werden. Analog bildet der der Umlenkeinheit 30 nachgelagerte Teil des Transportsystems 10 ein Abfördersystem 40 für die Umlenkeinheit 30, in dem die Verpackungsbeutel 28 mit den enthaltenen Produktstapeln 8 nach der Umlenkung in der durch den Pfeil 36 charakterisierten Abförderrichtung als Transportrichtung weitertransportiert werden. Entsprechend der im Ausführungsbeispiel dargestellten Ausführungsform ist das Abfördersystem dabei einsträngig oder einkanalig ausgeführt Bei einer alternativ möglichem Ausführungsform, bei der zwei oder mehr Produktstapel 8 in jeweils einem gemeinsamen Verpackungsbeutel 28 in der Umlenkeinheit 30 umgelenkt werden, erfolgt die endgültige Vereinzelung beispielsweise in einer Schneideeinheit nach der Umlenkeinheit 30, und das ausschließende Abfördersystem 40 ist dann mehrstängig oder mehrkanalig mit paralleler Führung der Produktströme ausgestaltet.

Von der Umlenkeinheit 30 aus sind die die Produktstapel 8 enthaltenden Verpackungsbeutel 28 über das Transportsystem 10 einer nachgeschalteten zweiten Schweißstation 42 zuführbar. In dieser zweiten Schweißstation 42 erfolgt die Verschweißung der Stirnseiten 34 der Verpackungsbeutel 28, wobei auf Grund der Orientierung der Stapel relativ zur Transportrichtung auch hier die Verschweißung von der Seite her erfolgen kann. Dazu umfasst die zweite Schweißstation 42 ebenfalls seitlich angeordnete Heizmittel 44, die beispielsweise als beidseitig zum Produktstrom angeordnete Heizspiegel ausgeführt sein können.

Anschließend mündet das Transportsystem 10 in eine der zweiten Schweißstation 42 nachgeschaltete Kühleinrichtung, in der eine Abkühlung der frisch verschweißten Verpackungsbeutel 28 erfolgt.

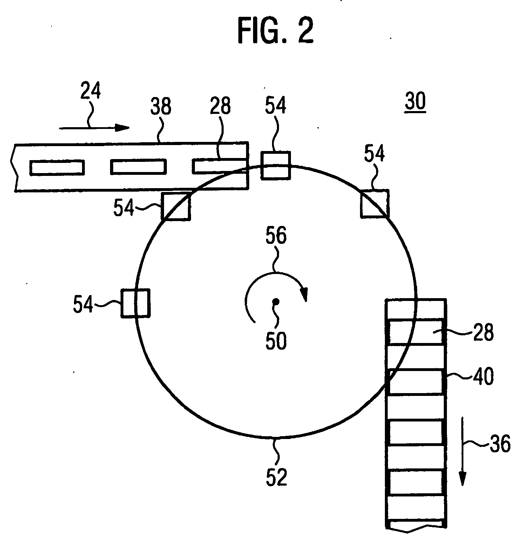

Die Verpackungsanlage 1 ist ebenso wie ihre Komponenten für eine besonders hohe Durchsatzrate beim Verpacken der Produktstapel 8 ausgelegt. Bezüglich der Umlenkeinheit 30 wird diesem Auslegungsziel unter anderem dadurch Rechnung getragen, dass bei der Umlenkung, also bei der Überführung vom Zufördersystem 38 zum Abfördersystem 40, insbesondere im Hinblick auf den im Ausführungsbeispiel vorgesehenen, mit dem Winkel zwischen Zu- und Abförderrichtung übereinstimmenden Verdrehwinkel 32, ein Weitertransport der die Produktstapel 8 enthaltenden Verpackungsbeutel 28 auf dem Segment einer Kreisbahn vorgesehen ist, wobei die Orientierung der Längsachse der Verpackungsbeutel 28 auch nach der Umlenkung, also im Abfördersystem 40 gleich der Orientierung vor der Umlenkung, also im Zufördersystem 38, und damit unverändert bleiben soll. Wie der schematischen Darstellung in FIG. 2 entnehmbar ist, umfasst die Umlenkeinheit 30 dazu einen um eine Drehachse 50 rotierbar gelagerten Träger 52, an dem gleichmäßig beabstandet von der Drehachse 50 eine Anzahl von Mitnehmern 54 für die Verpackungsbeutel 28 angeordnet ist. Wie durch den Pfeil 56 angedeutet, rotiert der Träger 52 beim Betrieb der Verpackungsanlage 1 um die Drehachse 50, wobei jeder Verpackungsbeutel 28 in der Überführungsphase von jeweils einem der Mitnehmer 54 auf dem Segment einer Kreisbahn vom Zufördersystem 38 zum Abfördersystem 40 transportiert wird.

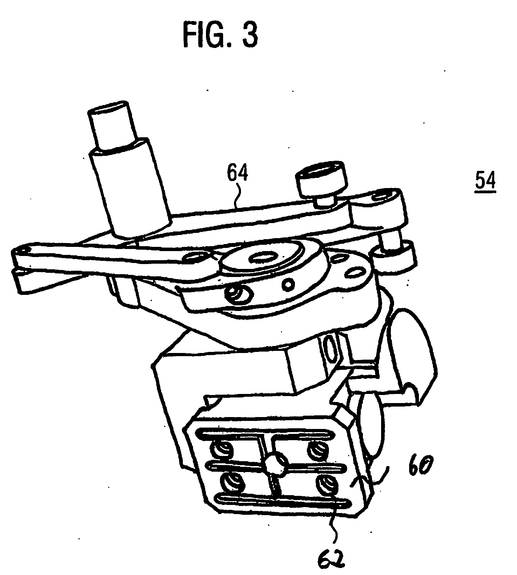

Im Ausführungsbeispiel ist der Täger 52 als Drehteller, also als Scheibe, ausgeführt. Ein Mitnehmer 54 ist in FIG. 3 schematisch dargestellt. Der Mitnehmer 54 umfasst eine Kontaktplatte 60 mit einer Anzahl von Saugbohrungen 62. Diese sind über in das Traggerüst 64 des jeweiligen Mitnehmers 54 integrierte Saugkanäle mit einem in den Drehteller intergrierten Vakuumsystem verbunden. Über dieses können die Saugbohrungen 62 gezielt mit Ansaugvakuum beaufschlagt werden, so dass über entsprechende Ansaugung die Verpackungsbeutel vom jeweiligen Mitnehmer 54 erfasst und weitertransportiert werden können. Über das Traggerüst 64 ist der Mitnehmer 54 im Übrigen derart ansteuerbar, dass die Orientierung der Kontaktplatte 60 bedarfs- und positionsabhängig beliebig eingestellt werden kann.

Durch die Überführung der mit den Produktstapeln 8 versehenen Verpackungsbeutel 28 auf dem Kreisbahnsegment werden diese bezüglich der Geschwindigkeitskomponente in Zuförderrichtung über die Strecke des Kreisradius von einer vergleichsweise hohen Transportgeschwindigkeit in relativ kurzer Zeit auf Restgeschwindigkeit null abgebremst. Durch den Zugriff der Mitnehmer 54 über das Saugsystem, also außen am Verpackungsbeutel 28, müssen somit die darin befindlichen Produktstapel 8 während des Abbremsens in Zuförderrichtung aufgrund der in dieser Phase des Verpackungsvorgangs noch offenen Stirnseiten 34 der Verpackungsbeutel 28 im Wesentlichen über die Haftreibung an der Innenoberfläche des jeweiligen Verpackungsbeutels 28 abgebremst werden. Um dabei gerade im Hinblick auf gängige Materialien für den Verpackungsbeutel 28, insbesondere Verpackungsfolie, ein unerwünschtes Herausgleiten des jeweiligen Produktstapels 8 aus der noch offenen Stirnseite 34 des Verpackungsbeutels 28 mit besonders einfach gehaltenem apparativen Aufwand, also insbesondere ohne zusätzliche mechanische Halte- oder Fixiermittel, zu ermöglichen, ist die Umlenkeinheit 30 durch geeignete Ansteuerung der Mitnehmer 54 für ein spezifisches Bewegungs- und Orientierungsprofil der Mitnehmer 54 während der Übergangsphase ausgelegt.

Dazu ist vorgesehen, während der Übergangsphase durch gezielte Veränderung der Orientierung der jeweiligen Kontaktplatte 60 und damit auch des daran geführten Verpackungsbeutels 28 die bei der Kreisführung des den Produktstapel 8 beinhaltenden Verpackungsbeutels 28 auf den Produktstapel 8 wirkende Zentrifugalkraft gezielt zu nutzen, um durch die auftretenden Querkräfte die Anhaftung des Produktstapels 8 an der Innenseite des jeweiligen Verpackungsbeutels 28 zumindest vorübergehend zu erhöhen. Dazu wird die Orientierung des Verpackungsbeutels 28 während seiner Überführung auf der Kreisbahn zumindest vorübergehend verändert, indem die Längsachse des Verpackungsbeutels in dieser Phase geeignet geneigt wird. Die Orientierung wird dabei während der Überführungsphase vorzugsweise kontinuierlich angesteuert. Als Auslegungsgrundsatz für eine entsprechende Ansteuerung ist dabei vorgesehen, dass in der Überführungsphase die Kraftkomponente der infolge der Drehbewegung auf den Produktstapel 8 wirkenden Zentrifugalkraft in Längsrichtung des Verpackungsbeutels 28 einen vorgegebenen Grenzwert zu keinem Zeitpunkt überschreitet. Dieser Grenzwert wird dabei vorteilhafterweise derart vorgegeben, dass er mit einem hinreichenden Sicherheitsabstand unterhalb der Losbrechkraft des Produktstapels 8 vom ihn umgebenden Verpackungsbeutel 28 liegt.

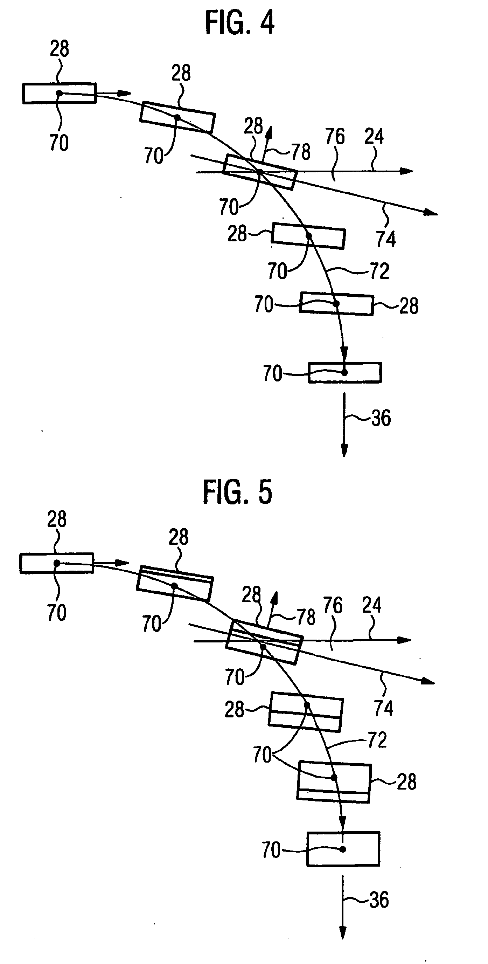

Ein entsprechender Bewegungsablauf während der Überführungsphase ist schematisch für zwei Ausführungsbeispiele in den FIG. 4, 5 gezeigt. Das Ausführungsbeispiel gem. FIG. 4 beschreibt dabei den Fall, dass die Orientierung des Verpackungsbeutels parallel zur Drehachse 50 während der Überführungsphase unverändert bleibt. Im Ausführungsbeispiel gem. FIG. 5 ist hingegen der Fall dargestellt, dass der Verpackungsbeutel 28 während der Überführungsphase auch noch um seine Längsachse gedreht, also von einer eingangsseitig "stehenden" in eine ausgangsseitig "liegende" Position überführt wird.

In FIG. 4 ist der Verpackungsbeutel 28 in mehreren aufeinanderfolgenden Positionen während des Überführungsvorgangs gezeigt. Über den (in FIG. 4 nicht gesondert dargestelten) Mitnehmer 54 wird der Schwerpunkt 70 des Verpackungsbeutels 28 in der Überführungsphase entlang einer durch den Pfeil 72 dargestellten Kreisbahn geführt. Die für die Orientierung des Verpackungsbeutels 28 charakteristische Längsrichtung ist dabei durch den Pfeil 74 dargestellt. Wie der Darstellung in FIG. 4 entnehmbar ist, ist der Pfeil 74 eingangs der Überführungsphase 4, 5 gezeigt. Das Ausführungsbeispiel gem. FIG. 4 beschreibt dabei den Fall, dutels ist parallel zur Transportrichtung im Zufördersystem 38 ausgerichtet. Ausgangs der Umlenkeinheit 30 ist der Pfeil 74 ebenfalls parallel zum Pfeil 24 ausgerichtet, d. h. ausgangsseitig ist der Verpackungsbeutel 28 immer noch mit seiner Längsrichtung parallel zur Zuförderrichtung ausgerichtet; er hat also seine Orientierung auch nach der Umlenkung beibehalten. Aufgrund dessen ist er ausgangsseitig mit seiner Längsachse senkrecht zur Abförderrichtung (Pfeil 36) ausgerichtet, so dass im Abfördersystem 40 der erwünschte seitliche Zugriff zum Verschweißen der Stirnseiten möglich ist.

Während der Übergangsphase aber wird der Verpackungsbeutel 28 vorübergehend mit seiner Längsachse zur Abförderrichtung hin geneigt, so dass ein Winkel 76 zwischen dem Pfeil 24 (entspricht der Zuförderrichtung und damit der ursprünglichen Orientierung des Verpackungsbeutels 28) und dem Pfeil 74 (entspricht der Ausrichtung seiner Längsachse) entsteht. Hierdurch resultiert in der Übergangsphase eine Komponente der Zentrifugalkraft nach außen hin, dargestellt durch den Pfeil 78, die in der Art einer Querkraft den Produktstapel 8 zusätzlich an die Innenwand des Verpackungsbeutels 28 drückt und ihn dort zusätzlich fixiert. Das Bewegungsprofil und auch die Anstellung des Winkels 76 sind dabei derart gewählt, dass unter Berücksichtigung der sonstigen Geometrieparameter (insbesondere Radius der Kreisbahn) die Komponente der entstehenden Zentrifugalkraft in Längsrichtung des Verpackungsbeutels 28 gesehen einen vorgegebenen Grenzwert zu keiner Zeit überschreitet.

Im alternativen Beispiel gem. FIG. 5 wird der Verpackungsbeutel zusätzlich noch während der Überführungsphase "auf die Seite gelegt", also um seiner Längsrichtung um einen Winkel von 90° gedreht.

### Bezugszeichenliste

- 1: Verpackungsanlage
- 4: Folienschlauch
- 6: Zuführeinheit
- 8: Produktstapel
- 10: Transportsystem
- 12: Zuführschienen
- 14: Einschlagstation
- 16: Schlauchfolie
- 18: Formschuh
- 20: erste Schweißstation
- 22: Heizeinrichtung
- 24: Pfeil
- 26: Trenneinheit
- 28: Verpackungsbeutel
- 30: Umlenkeinheit
- 32: Verdrehwinkel
- 34: Stirnseite
- 36: Pfeil
- 38: Zufördersystem
- 40: Abfördersystem
- 42: zweite Schweißstation
- 44: Heizmittel
- 50: Drehachse
- 52: Träger
- 54: Mitnehmer
- 56: Pfeil
- 60: Kontaktplatte
- 62: Saugbohrung
- 64: Traggerüst
- 70: Schwerpunkt
- 72,74: Pfeil

## Patentansprüche

1. Verfahren zum Überführen von in Verpackungsbeutel (28) eingeschlagenen Produktstapeln (8), von einem Zufördersystem (38), in dem die in Verpackungsbeutel eingeschlagenen Produktstapel in einer Zuförderrichtung transportiert werden, auf ein Abfördersystem (40), in dem die in Verpackungsbeutel eingeschlagenen Produktstapel in einer in einem vorgegebenen Verdrehwinkel (32) zur Zuförderrichtung orientierten Abförderrichtung weitertransportiert werden, wobei die in Verpackungsbeutel eingeschlagenen Produktstapel in einem Überführungsbereich zwischen dem Zu- und dem Abfördersystem (38, 40) mit ihrem Schwerpunkt (70) auf dem Segment einer Kreisbahn geführt werden, **dadurch gekennzeichnet, dass** die in Verpackungsbeutel eingeschlagenen Produktstapel in ihrer Orientierung relativ zur Zuförderrichtung im Überführungsbereich vorübergehend derart zur Abförderrichtung hin geneigt werden, dass die Komponente parallel zur Zuförderrichtung der im Überführungsbereich auftretenden, auf die in Verpackungsbeutel eingeschlagenen Produktstapel wirkenden Zentrifugalkraft einen vorgegebenen Maximalwert zu keiner Zeit überschreitet.

2. Verfahren nach Anspruch 1, bei dem die in Verpackungsbeutel eingeschlagenen Produktstapel unter Beibehaltung ihrer Orientierung relativ zur Zuförderrichtung vom Zufördersystem (38) zum Abfördersystem (40) weitertransportiert werden.

3. Verfahren nach Anspruch 1 oder 2, bei dem die in Verpackungsbeutel eingeschlagenen Produktstapel während der Führung auf der Kreisbahn im Überführungsbereich um 90° um ihre Längsachse gekippt werden.

4. Umlenkeinheit (30) zum Überführen von in Verpackungsbeutel (28) eingeschlagenen Produktstapeln (8), von einem Zufördersystem (38) auf ein Abfördersystem (40), dessen Förderrichtung in einem vorgegebenen Verdrehwinkel (32) zur Förderrichtung im Zufördersystem (38) orientiert ist, **gekennzeichnet durch** eine Steuereinheit, die derart ausgelegt ist, dass die in Verpackungsbeutel eingeschlagenen Produktstapel in ihrer Orientierung relativ zur Zuförderrichtung im Überführungsbereich vorübergehend derart zur Abförderrichtung hin geneigt werden, dass die Komponente parallel zur Zuförderrichtung der im Überführungsbereich auftretenden, auf die in Verpackungsbeutel eingeschlagenen Produktstapel wirkenden Zentrifugalkraft einen vorgegebenen Maximalwert zu keiner Zeit überschreitet.

## Claims

1. Method for transferring product stacks (8) wrapped in packaging bags (28) from a supply system (38), in which the product stacks wrapped in packaging bags are transported in a supply direction, to a removal system (40), in which the product stacks wrapped in packaging bags are further transported in a removal direction that is oriented at a specified angular deflection (32) to the supply direction, the product stacks wrapped in packaging bags being guided in a transfer region between the supply system (38) and the removal system (40) having their centroids (70) on the segment of a circular path, **characterised in that**, in the transfer region, the product stacks wrapped in packaging bags are oriented relative to the supply direction so as to be temporarily inclined in the removal direction such that the component parallel to the supply direction of the centrifugal force that occurs in the transfer region and acts on the product stacks wrapped in packaging bags does not exceed a specified maximum value at any time.

2. Method according to claim 1, wherein the product stacks wrapped in packaging bags are further transported from the supply system (38) to the removal system (40) while maintaining their orientation relative to the supply direction.

3. Method according to either claim 1 or claim 2, wherein the product stacks wrapped in packaging bags are tilted about their longitudinal axis by 90° while being guided on the circular path in the transfer region.

4. Deflection unit (30) for transferring product stacks (8) wrapped in packaging bags (28) from a supply system (38) to a removal system (40), the conveying direction of which is oriented at a specified angular deflection (32) to the conveying direction in the supply system (38), **characterised by** a control unit which is designed such that, in the transfer region, the product stacks wrapped in packaging bags are oriented relative to the supply direction so as to be temporarily inclined in the removal direction such that the component parallel to the supply direction of the centrifugal force that occurs in the transfer region and acts on the product stacks wrapped in packaging bags does not exceed a specified maximum value at any time.

## Revendications

1. Procédé de transfert de piles de produits (8) emballées dans des sacs d'emballage (28) à partir d'un système d'amenée (38), dans lequel les piles de produits emballées dans des sacs d'emballage sont transportées dans une direction d'amenée, vers un système d'évacuation (40), dans lequel les piles de produits emballées dans des sacs d'emballage sont transportées plus loin dans une direction d'évacuation orientée selon une déviation angulaire (32) prédéterminée par rapport à la direction d'amenée, dans lequel les piles de produits emballées dans des sacs d'emballage sont guidées dans une zone de transfert entre le système d'amenée (38) et le système d'évacuation (40) avec leur centre de gravité (70) sur le segment d'une trajectoire circulaire, **caractérisé en ce que**, dans la zone de transfert, les piles de produits emballées dans des sacs d'emballage sont, dans leur orientation relativement à la direction d'amenée, inclinées temporairement par rapport à la direction d'évacuation de telle sorte que la composante, parallèlement à la direction d'amenée, de la force centrifuge apparaissant dans la zone de transfert, agissant sur les piles de produits emballées dans des sacs d'emballage, ne dépasse à aucun moment une valeur maximale prédéterminée.

2. Procédé selon la revendication 1, dans lequel les piles de produits emballées dans des sacs d'emballage sont transportées plus loin en conservant leur orientation relativement à la direction d'amenée depuis le système d'amenée (38) vers le système d'évacuation (40).

3. Procédé selon la revendication 1 ou 2, dans lequel les piles de produits emballées dans des sacs d'emballage sont, pendant le guidage sur la trajectoire circulaire dans la zone de transfert, basculées de 90° autour de leur axe longitudinal.

4. Unité de déviation (30) pour le transfert de piles de produits (8) emballées dans des sacs d'emballage (28) à partir d'un système d'amenée (38) vers un système d'évacuation (40), dont la direction de transport est orientée selon une déviation angulaire (32) prédéterminée par rapport à la direction de transport dans le système d'amenée (38), **caractérisée par** une unité de commande qui est conçue de telle sorte que, dans la zone de transfert, les piles de produits emballées dans des sacs d'emballage sont, dans leur orientation relativement à la direction d'amenée, inclinées temporairement par rapport à la direction d'évacuation de telle sorte que la composante, parallèlement à la direction d'amenée, de la force centrifuge apparaissant dans la zone de transfert, agissant sur les piles de produits emballées dans des sacs d'emballage, ne dépasse à aucun moment une valeur maximale prédéterminée.
